# EUROPEAN PATENT APPLICATION

(11) **EP 3 385 960 A1**
(43) Date of publication of application: **10.10.2018**
(21) Application number: 16870726.3
(22) Date of filing: 30.11.2016
(51) Int. Cl.: H01B 7/02, H01F 5/06, H01F 27/28

(54) **SELF-FUSIBLE INSULATED WIRE, COIL AND ELECTRICAL/ELECTRONIC DEVICE**

(30) Priority: 04.12.2015 JP 2015238082
(71) Applicant: Furukawa Electric Co. Ltd., Tokyo 100-8322 (JP); Furukawa Magnet Wire Co., Ltd., Tokyo 100-0005 (JP)
(72) Inventor: SAITO, Takeshi, Tokyo 100-8322 (JP); FUKUDA, Hideo, Tokyo 100-8322 (JP)
(74) Representative: Forstmeyer, Dietmar
(86) International application number: PCT/JP2016/085599
(87) International publication number: WO 2017/094789

(57) **Abstract**

A self-fusing insulated wire, containing:
a conductor having a rectangular cross-section;
a thermoplastic resin layer provided on the outer periphery of the conductor; and
a thermosetting fusing layer provided on the outer periphery of the thermoplastic resin layer;
wherein the fusing layer is composed of a hardening resin composition having an epoxy-group-containing phenoxy resin (a1), an epoxy resin (a2) having a softening point of 50°C or more and 250°C or less, and an imidazole-series hardening agent,
wherein, in the hardening resin composition, a content ratio of the resin (a1) and the resin (a2) satisfies the relationship of (a1):(a2) = 71:29 to 95:5 (mass ratio), and a content of the imidazole-series hardening agent with respect to 100 parts by mass of a total content of the resin (a1) and the resin (a2) is less than 2 parts by mass, and
wherein a storage elastic modulus at 85°C of the hardening resin composition after hardening thereof is from 100 to 2,500 MPa.

## Description

### TECHNICAL FIELD

The present invention relates to an insulated wire, a coil, and an electrical/electronic equipment.

### BACKGROUND OF THE INVENTION

In coils for electrical/electronic equipment including inverter-related equipment such as high-speed switching devices, inverter motors, transformers, and the like, there are used insulated electric wires (insulated wires) composed of a so-called enamel wire, insulated wires having multi-covering layers including a layer composed of an enamel resin and a covering layer composed of another kind of resin other than the enamel resin, and the like as a magnet wire.

In coils for electrical/electronic equipment, in order to solidify an insulated wire (winding wire) or to improve insulation properties, a method of impregnating a varnish into the coil installed in a stator core, and then drying the varnish thereby to harden it, has been carried out. Further, a technique of solidifying a winding wire without a varnish is also known. For example, Patent Literature 1 describes a self-fusing enamel wire having a fusing layer composed of a coating material in which an antioxidant has been added to a copolymer polyamide resin having a melting point of 170°C or more, provided on an upper layer of the enamel wire. Further, Patent Literature 2 describes a self-fusing enamel wire having a fusing layer provided on a conductor directly or through another insulator, in which the fusing layer is composed of a particular structure sulfone group-containing polyhydroxypolyether resin and an aromatic acid anhydride.

### CITATION LIST

### PATENT LITERATURE

Patent Literature 1: JP-A-2002-358836 ("JP-A" means unexamined published Japanese patent application)
Patent Literature 2: JP-A-11-297124

### DISCLOSURE OF INVENTION

### TECHNICAL PROBLEM

In recent years, a higher heat resistance has been required to the insulated wire. In a miniaturized or high-performance rotating electrical machine or the like, a working voltage is set high from its efficiency. In association with the high voltage, a calorific value is increasing. Further, in the miniaturized rotating electrical machine or the like, it is also hard to secure a sufficient radiation performance. Accordingly, the insulated wire used for the rotating electrical machine or the like has been increasingly required to achieve such properties that, even if subjected to a high temperature, for example, at 200°C or more, a solidified state (firmly fixed state) of the winding wire can be stably maintained, whereby an initial performance is continually realized. However, with respect to the self-fusing enamel wires described in Patent Literatures 1 and 2, if subjected to a high-temperature thermal environment, a firmly fixed state of the fixated fusing layer is likely to loosen, so that it is hard to stably maintain the firmly fixed state of the winding wire in a high-temperature environment of, for example, 200°C or more.

Further, the rotating electrical machine or the like is exposed to oil in its usage environment. Therefore, such a property that even if exposed to oil, the firmly fixed state of the winding wire is stably maintained, is required.

Further, in a miniaturized or high-performance electrical/electronic equipment (may be also referred to simply as electrical equipment), a way of using a winding wire (coil) manufactured by a processing of an insulated wire (for example, winding processing (coil processing)) by cramming it into a very narrow portion, has been commonly seen. For example, in the electrical equipment such as a rotating electrical machine and a transformer, it is no exaggeration to say that its performance is determined depending on how many coils can be installed into a slot of the stator core. The insulated wire used in such electrical equipment is subjected to a bending processing in a sophisticated manner and in a small bending radius. Accordingly, an advanced folding endurance is required for the resin covering layer.

The present invention is contemplated to provide: an insulated wire having a fusing layer as an outermost covering layer, in which the covering layer is hard to crack even by a bending processing, and is excellent in folding endurance, and also even if a firmly fixed fusing layer is exposed to a high-temperature environment, the firmly fixed fusing layer is able to stably maintain a solid fixation state, and also even if soaked in oil, the firmly fixed fusing layer is able to stably maintain the fixation state; a coil using the insulated wire; and an electrical/electronic equipment using the coil.

### SOLUTION TO PROBLEM

The present inventors have found that an insulated wire having a thermoplastic resin layer provided on a conductor having a rectangular cross-section and further having, provided on the outer periphery of the thermoplastic resin layer, a thermosetting fusing layer containing an epoxy-group-containing phenoxy resin and a particular epoxy resin in a particular ratio of these resins, and also containing an imidazole-series hardening agent, achieves such advantages: that even if folded, the insulated wire is hard to crack and is excellent in folding endurance; that even if exposed to a high-temperature environment, a firmly fixed state of the fusing layer firmly fixed due to a thermosetting can be stably maintained; and that even if soaked in oil, the above-described firmly fixed state can be stably maintained. The present invention was completed on the basis of the above findings.

In other words, the above-described problems of the present invention are solved by the following means.
[1] A self-fusing insulated wire, containing:
   a conductor having a rectangular cross-section;
   a thermoplastic resin layer provided on the outer periphery of the conductor; and
   a thermosetting fusing layer provided on the outer periphery of the thermoplastic resin layer;
   wherein the fusing layer is composed of a hardening resin composition containing an epoxy-group-containing phenoxy resin (a1), an epoxy resin (a2) having a softening point of 50°C or more and 250°C or less, and an imidazole-series hardening agent,
   wherein, in the hardening resin composition, a content ratio of the resin (a1) and the resin (a2) satisfies the relationship of (a1):(a2) = 71:29 to 95:5 (mass ratio), and a content of the imidazole-series hardening agent with respect to 100 parts by mass of a total content of the resin (a1) and the resin (a2) is less than 2 parts by mass, and
   wherein a storage elastic modulus at 85°C of the hardening resin composition after hardening thereof is from 100 to 2,500 MPa.
[2] A self-fusing insulated wire, containing:
   a conductor having a rectangular cross-section;
   a thermoplastic resin layer provided on the outer periphery of the conductor; and
   a thermosetting fusing layer provided on the outer periphery of the thermoplastic resin layer;
   wherein the fusing layer is composed of a hardening resin composition containing an epoxy-group-containing phenoxy resin (a1), an epoxy resin (a2) having a softening point of 50°C or more and 250°C or less, and an imidazole-series hardening agent,
   wherein, in the hardening resin composition, a content ratio of the resin (a1) and the resin (a2) satisfies the relationship of (a1):(a2) = 71:29 to 95:5 (mass ratio), and a content of the imidazole-series hardening agent with respect to 100 parts by mass of a total content of the resin (a1) and the resin (a2) is less than 2 parts by mass, and
   wherein a storage elastic modulus at 130°C of the hardening resin composition after hardening thereof is from 100 to 2,500 MPa.
[3] The self-fusing insulated wire described in the above item [1] or [2],
   wherein the resin (a1) has two or more epoxy groups in its molecule.
[4] The self-fusing insulated wire described in any one of the above items [1] to [3], wherein the weight average molecular weight of the resin (a1) is 10,000 to 100,000.
[5] The self-fusing insulated wire described in any one of the above items [1] to [4], wherein the epoxy equivalent of the resin (a1) is 3000 to 20,000 g/eq, and the epoxy equivalent of the resin (a2) is 150 to 2,500 g/eq.
[6] The self-fusing insulated wire described in any one of the above items [1] to [5], wherein the thickness of the fusing layer is 2 to 100 µm.
[7] The self-fusing insulated wire described in any one of the above items [1] to [6], wherein the melting point of the thermoplastic resin constituting the thermoplastic resin layer is 250°C or more.
[8] The self-fusing insulated wire described in any one of the above items [1] to [7], wherein the thermoplastic resin layer is a layer composed of one kind or two or more kinds of thermoplastic resins selected from the group consisting of polyphenylene sulfide, polyether ether ketone, modified polyether ether ketone and a thermoplastic polyimide.
[9] A coil, containing the self-fusing insulated wire described in any one of the above items [1] to [8].
[10] An electrical/electronic equipment, having the coil described in the above item [9]

In the description of the present invention, any numerical expressions in a style of "...to..." will be used to indicate a range including the lower and upper limits represented by the numerals given before and after "to", respectively.

### ADVANTAGEOUS EFFECTS OF INVENTION

The self-fusing insulated wire of the present invention has a thermosetting fusing layer as an outermost covering layer, and even if folded, the insulated wire is hard to crack in the covering layer and is excellent in folding endurance. Further, the fusing layer that is firmly fixed with an object due to a thermal hardening is able to stably maintain the firmly fixed state even if exposed to a high-temperature environment, and even if soaked in oil. Further, the coil of the present invention and electrical/electronic equipment using the coil are able to stably maintain the rigid fixation state of the winding wire even in a high-temperature environment, whereby an excellent performance can be continually achieved even when used under extreme environmental condition.

Other and further features and advantages of the invention will appear more fully from the following description, appropriately referring to the accompanying drawings.

### BRIEF DESCRIPTION OF THE DRAWINGS

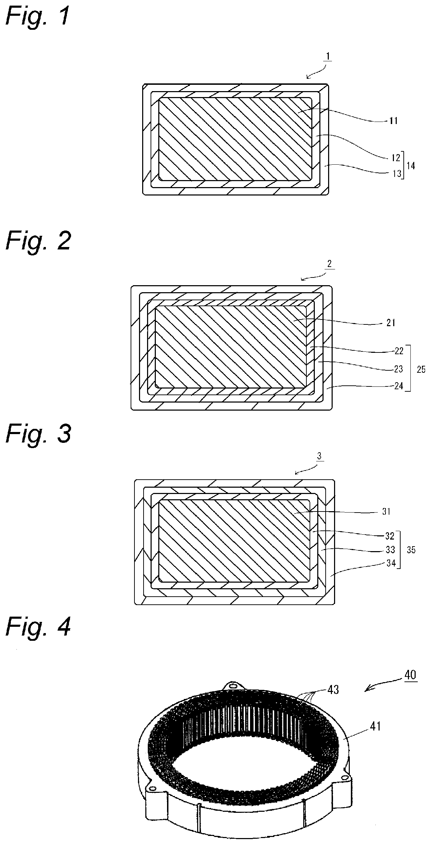

{Fig. 1}
   Fig. 1 is a schematic cross-sectional view showing a preferred embodiment of the insulated wire of the present invention.
{Fig. 2}
   Fig. 2 is a schematic cross-sectional view showing another preferred embodiment of the insulated wire of the present invention.
{Fig. 3}
   Fig. 3 is a schematic cross-sectional view showing further another preferred embodiment of the insulated wire of the present invention.
{Fig. 4}
   Fig. 4 is a schematic perspective view showing a preferable embodiment of the stator used in the electrical/electronic equipment of the present invention.
{Fig. 5}
   Fig. 5 is a schematic exploded perspective view showing a preferable embodiment of the stator used in the electrical/electronic equipment of the present invention.

### MODE FOR CARRYING OUT THE INVENTION

### [Self-fusing insulated wire]

The self-fusing insulated wire of the present invention (hereinafter, may be also referred to as "the insulated wire of the present invention") has a layer composed of a thermoplastic resin (referred to as a thermoplastic resin layer) provided on the outer periphery of a conductor having a rectangular cross-section, and a thermosetting fusing layer provided on the outer periphery of the thermoplastic resin layer. The above-described thermoplastic resin layer may be provided directly on the outer periphery of the above-described conductor, or may be provided through an insulating layer (namely, the insulated wire may have an insulating layer between the conductor and the thermoplastic resin layer). Further, the above-described fusing layer may be provided directly on the outer periphery of the above-described thermoplastic resin layer, or may be provided through a layer composed of a thermosetting resin (referred to as a thermosetting resin layer) (namely, the insulated wire may have a thermosetting resin layer between the thermoplastic resin layer and the fusing layer). The compositions of the conductor and each of the resin-covering layers are described below.

In the present invention, in a case where the expression "a layer composed of a resin (resin Z)" is used, this expression is used as a meaning including both embodiments of a layer formed only from the resin Z and a layer formed from the resin Z together with other components (for example, resins other than the resin Z, or additives). Herein, the content of the above-described "other component" in the layer composed of the resin Z is not particularly limited, as long as it does not impair the effect of the present invention. Ordinarily, the content thereof is more than 0% by mass and 5% by mass or less.

Hereinafter, preferable embodiments of the insulated wire according to the present invention are described with reference to the drawings. However, the present invention is not limited to the following embodiments, except for the matters stipulated in the present invention. Further, the form shown in each drawing is a schematic view for making comprehension of the present invention easy. Therefore, the size, the thickness, or the relative magnitude relation and the like of each member may be appropriately subjected to variation for the purpose of illustration. Accordingly, the drawing does not show a real relation as it is. Further, those other than the matters stipulated in the present invention are not limited to the external form and the shape shown in these drawings.

A preferable insulated wire 1 of the present invention whose cross-sectional view is shown in Fig. 1 has a conductor 11 and a resin covering layer 14 formed on the outer periphery of the conductor 11.

As to the conductor 11, its cross-sectional shape is rectangular (flat angular shape). In the present invention, the conductor having a rectangular cross-section includes a conductor having an oblong cross-section and a conductor having a square cross-section.

The resin covering layer 14 has double-layered structure composed of a thermoplastic resin layer 12 as an innermost resin layer in contact with the outer periphery of the conductor 11 and a fusing layer 13 in contact with the outer periphery of the thermoplastic resin layer 12. A total thickness of the resin covering layer 14 is preferably set to a range of 40 to 250 µm.

In the present specification, the thickness of the resin covering layer or each of the resin layers which constitute the resin covering layer is a value calculated as an average from the values of measurement in accordance with the following measuring method of: observing the cross-section of the wire cut at right angle with respect to the longitudinal direction thereof by using a microscope; then arbitrarily selecting 16 points of the shortest distance of from the outer periphery of the inner layer in contact with the resin layer of the measuring object (a conductor in a case where the resin layer of the measuring object is in contact with the conductor) to the outer periphery of the resin layer of the measuring object; and then measuring the distances at the arbitrarily selected 16 points.

A preferable insulated wire 2 of the present invention whose cross-sectional view is shown in Fig. 2 has the same constitution as the insulated wire 1, except for an insulating layer 22 interposed between a conductor 21 and a thermoplastic resin layer 23. In other words, the insulated wire 2 has the conductor 21 and a resin covering layer 25 formed on the periphery of the conductor 21. The resin covering layer 25 has three-layered structure composed of the insulating layer 22 as an innermost resin layer in contact with the outer periphery of the conductor 11, the thermoplastic resin layer 23 in contact with the outer periphery of the insulating layer 22, and a fusing layer 24 in contact with the outer periphery of the thermoplastic resin layer 23. A total thickness of the resin covering layer 25 is preferably set to a range of 50 to 300 µm.

A preferable insulated wire 3 of the present invention whose cross-sectional view is shown in Fig. 3 has the same constitution as the insulated wire 1, except for a thermosetting resin layer 33 interposed between a thermoplastic resin layer 32 and a fusing layer 34. In other words, the insulated wire 3 has the conductor 31 and a resin covering layer 35 formed on the periphery of the conductor 31. The resin covering layer 35 has three-layered structure composed of the thermoplastic resin layer 32 as an innermost resin layer in contact with the outer periphery of the conductor 11, the thermosetting resin layer 33 in contact with the outer periphery of the thermoplastic resin layer 32, and a fusing layer 34 in contact with the outer periphery of the thermosetting resin layer 33. A total thickness of the resin covering layer 35 is preferably set to a range of 50 to 300 µm.

Further, in the form of the insulated wire 3, a form having the above-described insulating layer (not shown in Fig. 3) between the conductor 31 and the thermoplastic resin layer 32, may be also preferably adopted as the insulated wire of the present invention.

### <Conductor>

As the conductor used in the present invention, use may be made of any conductor that is usually used in insulated wires and examples thereof include a metal conductor such as a copper wire and an aluminum wire. The conductor is preferably a low-oxygen copper whose oxygen content is 30 ppm or less, and furthermore preferably a low-oxygen copper whose oxygen content is 20 ppm or less or oxygen-free copper. In a case where the conductor is melted by heat for the purpose of welding if the oxygen content is 30 ppm or less, voids caused by contained oxygen are not occurred at a welded portion, the deterioration of the electrical resistance of the welded portion can be prevented, and the strength of the welded portion can be also secured.

As to the conductor used in the present invention, its cross-sectional shape is rectangular (flat angular shape). The flat angular shaped conductor is able to increase a space factor with respect to the stator core at the winding, when compared to a circular conductor.

In view of suppressing a partial discharge from a corner portion, the conductor of the flat angular shape has preferably such a shape that chamfered edges (curvature radius r) are provided at four corners as shown in Figs. 1 to 3. The curvature radius r is preferably 0.6 mm or less, and more preferably in a range from 0.2 to 0.4 mm.

The size of the conductor is not particularly limited. In the case of the rectangular conductor, in the rectangular cross-sectional shape, the width (long side) thereof is preferably from 1 to 5 mm, and more preferably from 1.4 to 4.0 mm, and the thickness (short side) is preferably from 0.4 to 3.0 mm, and more preferably from 0.5 to 2.5 mm. The ratio of length (thickness:width) of the width (long side) to the thickness (short side) is preferably from 1:1 to 4:1. To the contrary, in the case of a conductor whose cross-sectional shape is round, the size is preferably 0.3 to 3.0 mm, and preferably 0.4 to 2.7 mm in terms of a diameter.

### <Thermoplastic resin layers 12, 23 and 32>

Examples of the thermoplastic resin constituting the thermoplastic resin layers 12, 23 and 32 include: commodity engineering plastics such as polyamide (also referred to as nylon), polyacetal (POM), polycarbonate (PC), syndiotactic polystyrene resin (SPS), polybutylene terephthalate (PBT), polyethylene terephthalate (PET), polyethylene naphthalate (PEN), and ultrahigh molecular weight polyethylene; and in addition, super engineering plastics such as polysulfone (PSF), polyphenylene sulfide, polyether ketone (PEK), polyarylether ketone (PAEK), tetrafluoroethylene/ethylene copolymer (ETFE), polyether ether ketone (PEEK), modified PEEK, polyetherketoneketone (PEKK), tetrafluoroethylene/perfluoalkylvinylether copolymer (PFA), polytetrafluoroethylene (PTFE), a thermoplastic polyimide (TPI), a thermoplastic polyamideimide, and a liquid crystal polyester; and further a polymer alloy composed of polyethylene terephthalate (PET) or polyethylene naphthalate (PEN) as a base resin, ABS/polycarbonate, NYLON 6,6, aromatic polyamide, polymer alloys containing the foregoing engineering plastics such as polyphenylene ether/NYLON 6,6, polyphenylene ether/polystyrene, and polybutylene terephthalate/polycarbonate.

Among these, crystalline thermoplastic resins are preferable. Among the above-described thermoplastic resins, examples of the crystalline thermoplastic resins include: general-purpose engineering plastics such as polyamide, polyacetal, polybutylene terephthalate, polyethylene terephthalate, and ultrahigh molecular weight polyethylene; and a syndiotactic polystyrene resin, polyphenylene sulfide, polyether ketone, PEEK, modified PEEK, polyarylether ketone, polyether ketone ketone, and a thermoplastic polyimide resin.

Further, it is preferable that a thermoplastic resin having high heat resistance (a melting point equal to or higher than 250°C) is used. From this viewpoint, a syndiotactic polystyrene resin, polyphenylene sulfide, polyarylether ketone, PEEK, modified PEEK, polyether ketone ketone, polyamide (particularly nylon 6,6), polyether ketone, or a thermoplastic polyimide is preferably used. It is more preferable that a resin selected from the group consisting of polyphenylene sulfide, PEEK, modified PEEK, and a thermoplastic polyimide is used.

Regarding the thermoplastic resin, one kind may be used alone, or two or more kinds may be used in mixture.

The thickness of the thermoplastic resin layers 12, 23 and 32 is not particularly limited. For example, it is preferably 30 to 200 µm, more preferably 50 to 150 µm.

### <Fusing layers 13, 24, and 34>

The fusing layers 13, 24, and 34 are each a thermosetting layer. By hardening the fusing layer due to heating, the fusing layer and an object in contact with the fusing layer can be firmly fixed. As a result, the insulated wire can be solidified to the object. The fusing layers 13, 24, and 34 are each composed of a hardening resin composition containing an epoxy-group-containing phenoxy resin and an epoxy resin having a particular softening point, as a combination in a particular ratio of these resins, and also containing an imidazole-series hardening agent. Such composition allows a stable maintenance of the fixing strength after firmly fixing the fusing layer, even if the firmly fixed state is exposed to a high-temperature environment or is soaked in oil. The resins which constitute the fusing layers 13, 24, and 34 are described below.

### -Epoxy-group-containing phenoxy resin (a1)-

The epoxy-group-containing phenoxy resin (a1) (hereinafter, may be also referred to simply as "the resin (a1)") means a resin obtained by reacting a bisphenol compound and an epichlorohydrin. The resin (a1) has an epoxy group in the molecule (preferably has 2 or more epoxy groups in the molecule) and has a property that the resin is hardened by a cross-linking structure formed through this epoxy group.

The weight average molecular weight (Mw) of the resin (a1) is preferably 10,000 to 100,000, more preferably 30,000 to 80,000. The weight average molecular weight can be determined by using GPC (gel filtration chromatography).

As to the resin (a1), its epoxy equivalent (the number of grams of the resin containing 1 gram equivalent of the epoxy group) is preferably from 3,000 to 20,000 g/equivalent (eq), and more preferably from 3,000 to 16,000 g/equivalent (eq). By adjusting the epoxy equivalent to the above-described range, a viscosity is appropriately suppressed, so that a working property is improved, and also a heat resistance after hardening can be increased.

The glass transition point (Tg) of the resin (a1) is preferably 120 to 250°C, more preferably 130 to 180°C. The glass transition point is determined by the method described in the [EXAMPLES] described below.

The resin (a1) having the above-described properties can be prepared in accordance with an ordinarily method and also its commercial products can be used. Examples of commercially-available products that can be used as the resin (a1) include YX7200B35 (trade name, manufactured by Mitsubishi Chemical Corporation), YX6954BH30 (trade name, manufactured by Mitsubishi Chemical Corporation), PhenoTohto YP-50S (trade name, manufactured by NIPPON STEEL & SUMIKIN CHEMICAL CO., LTD.), and PhenoTohto YP-70 (trade name, manufactured by NIPPON STEEL & SUMIKIN CHEMICAL CO., LTD.).

Regarding the resin (a1) existing in the fusing layer, one kind may be used alone, or two or more kinds may be used in mixture.

### -Epoxy resin (a2)-

The fusing layers 13, 24, and 34 each contain, in addition to the above-described resin (a1), an epoxy resin (a2) having a softening point of 50°C or more and 250°C or less (namely a solid at room temperature (25°C)) (hereinafter, may be also referred to simply as "the resin (a2)"). The resin (a1) and the resin (a2) are a different resin from each other. The softening point of the resin (a2) is preferably 50 to 150°C, more preferably 60 to 120°C. The softening point is determined by the method described in the [EXAMPLES] described below.

The epoxy equivalent of the resin (a2) is preferably 150 to 2500 g/(eq), more preferably 400 to 2000 g/eq.

The resin (a2) is not particularly limited, as long as it has the above-described softening point. Examples thereof include bisphenol A-type, bisphenol F-type, bisphenol S-type, brominated bisphenol A-type, hydrogenated bisphenol A-type, hydrogenated bisphenol F-type, biphenyl-type, phenol novolac-type, cresol novolac-type, trisphenol methane-type, tetraphenol methane-type, glycidyl ester-type, glycidyl amine-type, and alicyclic epoxy resin. Among these, a cresol novolac-type epoxy resin and a bisphenol A-type epoxy resin are preferred.

The weight average molecular weight of the resin (a2) is preferably 300 to 6,000.

The resin (a2) having the above-described properties can be prepared in accordance with an ordinarily method and also its commercial products can be used. Examples of commercially-available products that can be used as the resin (a2) include 1001 (trade name, manufactured by Mitsubishi Chemical Corporation), ECN1299 (trade name, manufactured by Ciba-Geigy), 1002 (trade name, manufactured by Mitsubishi Chemical Corporation), 1003 (trade name, manufactured by Mitsubishi Chemical Corporation), 1004 (trade name, manufactured by Mitsubishi Chemical Corporation), and 1007 (trade name, manufactured by Mitsubishi Chemical Corporation).

Regarding the resin (a2) existing in the fusing layer, one kind may be used alone, or two or more kinds may be used in mixture.

In the above-described fusing layer (namely, in the above-described hardening resin composition which constitutes the above-described fusing layer), a content ratio (mass ratio) of the resin (a1) and the resin (a2) satisfies (a1):(a2) = 71:29 to 95:5, and preferably (a1):(a2) =73:27 to 95:5. In a case where the content of the resin (a1) is more or less than the ratio stipulated above, it becomes hard to achieve a desired fixing strength.

In the above-described fusing layer, a total content of the resin (a1) and the resin (a2) is preferably 80% by mass or more, more preferably 90% by mass or more, furthermore preferably from 95 to 99.5% by mass, and still more preferably from 97 to 99.2% by mass.

Subsequently, an imidazole-series hardening agent used in the fusing layers 13, 24, and 34 is described. Note that, in the present invention, the imidazole-series hardening agent means a hardening agent having an imidazole ring in the molecule.

Examples of the imidazole-series hardening agent used in the present invention include 2-ethyl-4-methylimidazole, 1,2-dimethylimidazole, 1-benzyl-2-methylimidazole, 1-cyanoethyl-2-methylimidazole, 1-cyanoethyl-2-undecylimidazole, and 1-cyanoethyl-2-ethyl-4-methylimidazole.

The content of the imidazole-series hardening agent used in the present invention, which is present in the above-described fusing layer, is less than 2 parts by mass and more preferably from 0.5 to 1.5 parts by mass, with respect to 100 parts by mass as a total content of the resin (a1) and the resin (a2) in the fusing layer. The above-described content of the imidazole-series hardening agent used in the present invention, which is present in the above-described fusing layer, allows a stable maintenance of the rigid fixation state of the firmly fixed fusing layer, even if exposed to a high-temperature environment, or soaked in oil. If the content of the imidazole-series hardening agent is too small, the hardening of the fusing layer is likely to become insufficient. On the other hand, if the content is too much, the fixing strength or the oil resistance tends to decay.

As to the above-described fusing layer (namely, the hardening resin composition which constitutes the fusing layer), its peak exothermic temperature is preferably 120°C or more and more preferably from 130 to 180°C. Adjustment of the peak exothermic temperature to the above range allows improvement in folding endurance of the insulated wire to a large extent. The peak exothermic temperature can be determined by obtaining a DSC chart of the hardening resin composition which constitutes a fusing layer as a sample, as described in the [EXAMPLES] described below.

Further, in one embodiment of the present invention, the hardening resin composition which constitutes the above-described fusing layer is controlled so that its storage elastic modulus at 85°C after hardening (namely, of the hardened material) is from 100 to 2,500 MPa, preferably from 100 to 2,000 MPa, more preferably from 100 to 1,800 MPa, furthermore preferably from 100 to 1,500 MPa, still more preferably from 100 to 1,200 MPa, and particularly preferably from 100 to 1,000 MPa. Further, in one embodiment of the present invention, the above-described storage elastic modulus at 85°C may be adjusted to the range of 100 to 700 MPa, or the range of 100 to 500 MPa, or the range of 100 to 400 MPa.

Further, in another embodiment of the present invention, the hardening resin composition which constitutes the above-described fusing layer is controlled so that its storage elastic modulus at 130°C after hardening (namely, of the hardened material) is from 100 to 2,500 MPa, preferably from 120 to 2,000 MPa, more preferably from 120 to 1,000 MPa, and further preferably from 150 to 500 MPa.

Further preferably, in the insulated wire of the present invention, the hardening resin composition which constitutes the above-described fusing layer is preferably controlled so that its storage elastic modulus at 85°C after hardening (namely, of the hardened material) is from 100 to 1,500 MPa (preferably from 100 to 1,000 MPa, or alternatively it may be controlled to a range of 100 to 700 MPa, or from 100 to 500 MPa, or from 100 to 400 MPa) and its storage elastic modulus at 130°C after hardening the composition (namely, of the hardened material) is from 100 to 1,000 MPa (preferably from 120 to 1,000 MPa, more preferably from 150 to 500 MPa).

The storage elastic modulus at 85°C and the storage elastic modulus at 130°C of the hardening resin composition which constitutes the fusing layer can be measured by a method described in the [EXAMPLES] described below.

The thickness of each of the fusing layers 13, 24, and 34 is not particularly limited. However, it is preferably from 2 to 100 µm and more preferably from 5 to 50 µm from the viewpoint of combining a sufficient fixing strength and densification (space factor) of the coil.

### <Insulating layer 22>

The insulated wire of the present invention may have an insulating layer between a conductor and a thermoplastic resin layer.

The insulating layer 22 is preferably formed by a thermosetting resin, and is preferably a so-called enamel (resin) layer.

The thermosetting resin used in the insulating layer 22 is not particularly limited and examples thereof include polyimide (PI), polyurethane, polyamideimide (PAI), polyester (PEst), polybenzimidazole, polyesterimide (PEsI), a melamine resin, and an epoxy resin. Among these, at least one kind selected from the group consisting of polyimide, polyamideimide, polyester, and polyesterimide is preferred, and at least one kind selected from the group consisting of polyimide, polyamideimide, and polyester is more preferred.

In the insulating layer 22, one kind of the thermosetting resin may be used alone, or alternatively two or more kinds thereof may be used in combination.

The polyimide capable of constituting the insulating layer is not particularly limited, and ordinarily polyimide such as a whole aromatic polyimide and a thermosetting aromatic polyimide can be used. Alternatively, use may be made of polyimides obtained by a usual method in which an aromatic tetracarboxylic dianhydride and an aromatic diamine compound are reacted in a polar solvent to obtain a polyamide acid solution, and then the obtained polyamide acid solution is subjected to imidization by a thermal treatment at the time of baking.

The polyamideimide capable of constituting the insulating layer, when compared to the other resins, has a lower thermal conductivity and a higher dielectric breakdown voltage, and a bake-setting can be used. The polyamideimide is not particularly limited. Examples thereof include polyamideimides obtained by a usual method, for example, a method in which a tricarboxylic anhydride and a diisocyanate compound are directly reacted in a polar solvent, or a method in which a diamine compound are reacted with a tricarboxylic anhydride in a polar solvent to previously introduce an imide bond to the reaction product, and then the reaction product is subjected to amidation using a diisocyanate compound.

The polyester which may constitute the insulating layer is not particularly limited, as long as it is a polymer having an ester bond in the molecule and a thermosetting property. The polyester is preferably a Class H polyester (HPE). Examples of the Class H polyester include an aromatic polyester resin having been modified by adding thereto a phenol resin or the like, and also having Class H heat resistance.

Further, the polyesterimide capable of constituting the insulating layer is not particularly limited, as long as it is a polymer having an ester bond and an imide bond in the molecule and a thermosetting property. For example, use may be made of: one, obtained by forming the imide bond from a tricarboxylic anhydride and an amine compound, forming the ester bond from alcohol and a carboxylic acid or an alkyl ester thereof, and then joining of a free acid group or an anhydride group of the imide bond in an ester-forming reaction. As such a polyesterimide, use may be also made of: one, obtained by allowing, for example, a tricarboxylic anhydride, a dicarboxylic acid compound or an alkyl ester thereof to react with an alcohol compound and a diamine compound in a known method.

The thickness of the insulating layer 22 is not particularly limited. For example, it is ordinarily 20 to 120 µm, more preferably 40 to 100 µm.

The insulating layer 22 is ordinarily formed by bake coating on the surface of the conductor 21. Specifically, the insulating layer 22 is preferably formed by bake-coating of a varnish which contains a thermosetting resin on the surface of the conductor 21.

As a thermosetting resin used in the insulating layer 22, commercial products may be used. Examples of the polyimide include U IMIDE (trade name, manufactured by Unitika Ltd.), U-VARNISH (trade name, manufactured by Ube Industries, Ltd.), and the like. Examples of the polyamideimide include HI406 and HCI-series (each trade name, manufactured by Hitachi Chemical Co., Ltd.) and the like. Examples of the Class H polyesters include Isonel200 (trade name, manufactured by Schenectady International Inc.), and the like. Examples of the polyesterimide include Neoheat 8600A (trade name, manufactured by Toutoku Toryo Co., Ltd.), and the like.

### <Thermosetting resin layer 33>

The insulated wire of the present invention may have a thermosetting resin layer between a thermoplastic resin layer and a fusing layer.

As to the resin which constitutes the thermosetting resin layer 33, those described as the resins which constitute the above-described insulating layer 22 can be used. A preferable form of the resin is also the same as the above.

The thickness of the thermosetting resin layer 33 is not particularly limited. For example, it is ordinarily 20 to 120 µm, more preferably 40 to 100 µm.

### [Method of producing insulated wire]

The insulated wire of the present invention is produced by forming a resin covering layer which includes at least a thermoplastic resin layer and a fusing layer, on the outer periphery of a conductor.

In more detail, the insulated wire can be produced by sequentially or simultaneously forming a thermoplastic resin layer 12, 23, or 32 and a fusing layer 13, 24, or 34 on the outer periphery of a conductor 11, 21, or 31. Further, if needed, steps of forming the above-described insulating layer 22 or thermosetting resin layer 33 may be incorporated into the production step. In forming each layer, as an embodiment, each layer may be formed in order from the side close to the outer periphery of the conductor, or alternatively a part or all of the layers may be formed at the same time. Further, in forming each layer, a method of preparing a resin-containing varnish and forming a layer by using this varnish, and then drying, can be also adopted.

Further, it is also preferable that each of layers except for a fusing layer is sequentially subjected to bake-coating on the outer periphery of the conductor and then the fusing layer is formed as an outermost layer. Since the fusing layer is a layer formed by a thermosetting composition (a composition containing an epoxy-group-containing phenoxy resin, an epoxy resin having a softening point of 50°C or more, and an imidazole-series hardening agent), it is not usually practiced to form the fusing layer by baking.

In a case of forming a resin layer by baking, a varnish containing a resin which constitutes an objective resin layer is prepared and then the resin layer is formed by coating and baking the varnish. A conventional method is applied to the method of coating the varnish without any particular limitation. Examples thereof include: a method of using a die for coating a varnish, whose shape is similar to a cross-sectional shape of the conductor; and in a case where the cross-sectional shape of the conductor is rectangular, a method of using a die which is referred to as a "universal die" formed in the curb-like form.

The baking after a varnish coating can be performed by an ordinary method. For example, the baking can be conducted in a baking furnace. A specific baking condition in this case depends on the shape of the furnace to be used and therefore is not unambiguously determined. In a case of about 8-m natural convection vertical furnace, the examples of the condition include those of 10 to 90 sec-transit time at 400 to 650°C of in-furnace temperature.

To the above-described varnish, various kinds of additives may be added in a degree which does not adversely affect the properties of each layer. These additives are not particularly limited. Examples thereof include a cell nucleating agent, an oxidation inhibitor, an antistatic agent, an anti-ultraviolet agent, a light stabilizer, a fluorescent brightening agent, a pigment, a dye, a compatibilizing agent, a lubricating agent, a reinforcing agent, a flame retardant, a crosslinking agent, a crosslinking aid, a plasticizer, a thickening agent, a thinning agent, and an elastomer

It is preferred that the varnish contains an organic solvent or the like in the making of a varnish of a thermoplastic resin or a thermosetting resin. Examples of such an organic solvent include amide-based solvents such as N-methyl-2-pyrrolidone (NMP), N,N-dimethylacetamide (DMAC), and N,N-dimethylformamide; urea-based solvents such as N,N-dimethylethyleneurea, N,N-dimethylpropyleneurea, and tetramethylurea; lactone-based solvents such as γ-butyrolactone and γ-caprolactone; carbonate-based solvents such as propylene carbonate; ketone-based solvents such as methyl ethyl ketone, methyl isobutyl ketone, and cyclohexanone; ester-based solvents such as ethyl acetate, n-butyl acetate, butyl cellosolve acetate, butyl carbitol acetate, ethyl cellosolve acetate, and ethyl carbitol acetate; glyme-based solvents such as diglyme, triglyme, and tetraglyme; hydrocarbon-based solvents such as toluene, xylene, and cyclohexane; phenol-based solvents such as cresol, phenol, halogenated phenol; sulfone-based solvents such as sulfolane; and dimethylsulfoxide (DMSO).

As the organic solvent or the like, only one kind may be used alone, or two or more kinds may be used in combination.

### [Coil, and electrical/electronic equipment]

The insulated wire of the present invention is applicable to a field which requires electrical properties (resistance to voltage) and heat resistance, such as various kinds of electrical/electronic equipment, as coil. For example, the insulated wire of the present invention is used for a motor, a transformer and the like, which can compose high-performance electrical/electronic equipment. In particular, the insulated wire is preferably used as a winding wire for a driving motor of HV and EV. As descried above, according to the present invention, it is possible to provide an electrical/electronic equipment, in particular a driving motor of HV and EV, using the insulated wire of the present invention.

The coil of the present invention is not particularly limited, as long as it has a form suitable for various kinds of electrical/electronic equipment and examples thereof include items formed by a coil processing of the insulated wire of the present invention, and items formed by making an electrical connection of prescribed parts after subjecting the insulated wire of the present invention to a bending processing.

The items formed by a coil processing of the insulated wire of the present invention are not particularly limited and examples thereof include a roll formed by spirally winding around a long insulated wire. In these coils, the winding wire number or the like of the insulated wire is not particularly limited. Ordinarily, in winding around the insulated wire, an iron core or the like is used.

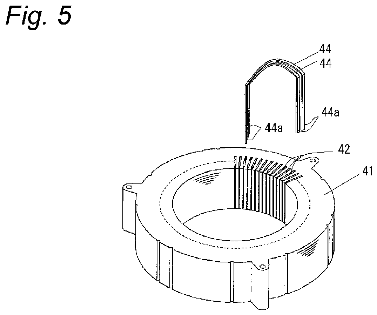

Example of the items formed by making an electrical connection of prescribed parts after subjecting the insulated wire of the present invention to a bending processing include coils used in a stator for rotating electrical machines or the like. Examples of these coils include a coil 43 (see Fig.4) prepared by cutting the insulated wire of the present invention in a prescribed length, and then subjecting it to a bending processing in the U-shaped form or the like, thereby preparing a plurality of wire segments 44, and then alternately connecting two open ends (terminals) 44a in the U-shaped form or the like of each wire segment 44, as shown in Fig. 5. By heating the coil 43 at the temperature equal to or more than the hardening-starting temperature of the fusing layer, adjacent fusing layers or the fusing layer and a slot 42 can be firmly fixed, so that the coil is fixed.

The electrical/electronic equipment formed by using this coil is not particularly limited and examples of one preferable embodiment of such electrical/electronic equipment include a rotating electric machine equipped with a stator 40 shown in Fig. 4 (in particular, driving motors of HV and EV). This rotating electric machine can be made in the same constitution as the conventional one, except for equipment of the stator 40.

The stator 40 can be made in the same constitution as the conventional one, except for its wire segment 44 being formed by the insulated wire of the present invention. Specifically, the stator 40 has a stator core 41, and a coil 43 in which, as shown in such as Fig. 3, wire segments 44 formed of the insulated wire of the present invention are incorporated in a slot 42 of the stator core 41 and open ends 44a of the wire segments 44 are electrically connected. This coil 43 is in the solidified state such that adjacent fusing layers, or the fusing layer and the slot 42 are firmly fixed. Herein, the wire segment 44 may be incorporated in the slot 42 with one segment. However, it is preferable that as shown in Fig. 4, two segments are incorporated in pairs. In this stator 40, the coil 43 formed by alternately connecting the open ends 44a that are two ends of the wire segments 44 which have been subjected to a bending processing as described above, is incorporated in the slot 42 of the stator core 41. In this time, the wire segment 44 may be incorporated in the slot 42 after connecting the open ends 44a thereof. Alternatively, after incorporating the wire segment 44 in the slot 42, the open ends 44a of the wire segment 44 may be subjected to a bending processing, thereby to connect them.

In the insulated wire, the use of the conductor having a rectangular cross-sectional shape allows, for example, increase in a ratio (space factor) of the cross-sectional area of the conductor to the slot cross-sectional area of the stator core, whereby properties of the electrical/electronic equipment can be improved.

The present invention will be described in more detail based on examples given below, but the invention is not meant to be limited by these.

### EXAMPLES

### [Experiment Examples]

### <Production Examples>

The insulated wire shown in Fig. 1 was produced.

### -Conductor 11-

As a conductor 11, a rectangular conductor having rectangular cross-section (long side 3.2 mm × short side 2.4 mm, curvature radius of chamfered edge at four corners r = 0.3 mm) (copper having an oxygen content of 15 ppm) was used.

### -Thermoplastic resin layer 12-

As a screw of the extruder, use was made of the screw specified by: 30 mm full flight; L/D = 20; and compression ratio 3. As the material, polyetheretherketome (PEEK) (manufactured by Solvay Specialty Polymers, trade name: KITA SPIRE KT-820, relative permittivity: 3.1, melting point: 250°C or more) was used. The extrusion temperature conditions were set as follows.

### (Extrusion temperature conditions)

C1: 300°C
C2: 380°C
C3:380°C
H: 390°C
D: 400°C

"C1, C2, and C3" indicate a cylinder temperature in the extruder, and respectively indicate 3-zone temperatures of the C1, C2 and C3 in the order from the resin-casting section. "H" indicates a temperature of the head section, and "D" indicates a temperature of the die section. After extrusion covering of PEEK using an extrusion die, water cooling was performed at 10 second intervals, thereby to form an 80 µm-thick thermoplastic resin layer 12 on the outer periphery of the conductor.

In this way, a pre-wire (length: 500 mm) having a structure having the thermoplastic resin layer (thickness: 80 µm) on the outer periphery of the conductor 11 was prepared.

### -Fusing layer 13-

Each of the resins and a hardening agent were dissolved in methyl ethyl ketone (MEK) in the blend ratios shown in Table 1 to prepare a fusing layer-forming solution in which a total content of the resin and the hardening agent is the concentration of 20% by mass. After cutting the pre-wire prepared above in the length of 300 mm, the 300 m-long pre-wire was soaked in the fusing layer-forming solution (25°C, 10 sec.), thereby to coat the fusing layer-forming solution on the outer periphery of the pre-wire. The pre-wire having the fusing layer-forming solution coated thereon was subjected to a heat treatment at 120°C for 5 min, thereby to vaporize MEK. Thus, a self-fusing insulated wire having a thermosetting fusing layer 13 (outermost layer, thickness: 30 µm) on the surface of the thermoplastic resin layer 12 was prepared.

### <Measurement and Evaluation>

### -Measurement of a storage elastic modulus at 85°C and a storage elastic modulus at 130°C of the hardened material formed by hardening a hardening resin composition constituting the fusing layer 13-

The above-described fusing layer-forming solution was coated in the film-shape on a flat surface of the glass plate and MEK was vaporized, thereby to obtain a film (a hardening resin composition constituting the fusing layer, thickness: 50 µm).

Next, the obtained film was subjected to a heat treatment at 190°C for 30 min to harden it, thereby to a hardened film (thickness: 50 µm). This hardened film was cut in rectangles of vertical 20 mm × horizontal 5 mm. A storage elastic modulus of this hardened film was measured by a dynamic viscoelasticity measuring device DMA8000 (manufactured by PerkinElmer, Inc.). In more detail, the storage elastic modulus was measured while rising a temperature up to the range of 50 to 250°C at the temperature-rising rate of 10 °C/min at 1Hz according to a tension mode, thereby to determine a storage elastic modulus at 85°C and a storage elastic modulus at 130°C.

### -Measurement of glass transition point-

The glass transition point is a value measured while rising a temperature up to the range of 30 to 250°C at the temperature-rising rate of 10 °C/min using a differential scanning calorimetric analyzer (DSC-60, manufactured by Shimadzu Corporation). The glass transition point is an extrapolation glass transition starting temperature according to JIS K 7121 "Testing Methods for Transition Temperatures of Plastics".

### -Measurement of softening point-

Measurement was conducted in accordance with Testing Methods for Softening Point (ring-and-ball method) subscribed in JIS K 7234-1986.

### -Peak exothermic temperature of the hardening resin composition for forming the fusing layer13-

The above-described fusing layer-forming solution was subjected to a heat treatment at 120°C for 5 min to vaporize MEK. Using a residue from which MEK was removed (a hardening resin composition for forming the fusing layer) as a sample, a DSC chart when the sample was temperature-elevated at the temperature-rising rate of 10 °C/min starting from 40°C was obtained by means of a differential scanning calorimetric analyzer (DSC-60, manufactured by Shimadzu Corporation). An apical temperature of the exothermic peak was defined as a peak exothermic temperature.

### -Folding endurance-

The self-fusing insulated wire produced above was subjected to a heat treatment at 80°C for 168 hours and was wound around an iron core of ϕ2.5mm so that the short-sided surface of the cross-section thereof was directed toward the iron core (namely, 180°C bending processing was conducted). The folding endurance was evaluated by rating a case where the fusing layer did not crack as the evaluation A, whereas by rating a case where the fusing layer cracked as the evaluation C.

### -Fixing force in ordinary temperature environment (25°C)-

The two self-fusing insulated wires produced above were firmly attached to each other by settling surfaces forming long sides of the cross section so as to be the settled wire length of 200 mm. Then, the settled wire was subjected to a heat treatment at 190°C for 30 min to firmly fix a whole attachment surface. This wire was left to stand in the environment of 25°C for 8 hrs., and then was set to a tensile tester (Autograph AGS-J, manufactured by Shimadzu Corporation), and both ends of the settled wires were pulled at the pulling rate of 50 mm/min in opposite directions with respect to one another. A strength required to fracture a firmly fixed state of the two wires was defined as a fixing strength and evaluation was conducted according to the following criteria.
In the case where the fixing force was 2 MPa or more: A
In the case where the fixing force was 0.5 MPa or more and less than 2 MPa: B
In the case where the fixing force was less than 0.5 MPa: C

### -Fixing force in a high-temperature environment (200°C)-

The two self-fusing insulated wires produced above were firmly attached to each other by settling surfaces forming long sides of the cross section so as to be the settled wire length of 200 mm. Then, the settled wire was subjected to a heat treatment at 190°C for 30 min to firmly fix a whole attachment surface. A pair of these wires were set to a tensile tester equipped with a thermostat (Autograph AGS-J, manufactured by Shimadzu Corporation, thermostat temperature: 200°C), and both ends of the settled wires were pulled at the pulling rate of 50 mm/min in opposite directions with respect to one another. A strength required to fracture a firmly fixed state of the two wires was defined as a fixing strength and evaluation was conducted according to the following criteria.
In the case where the fixing force was 2 MPa or more: A
In the case where the fixing force was 0.5 MPa or more and less than 2 MPa: B
In the case where the fixing force was less than 0.5 MPa: C

### -Fixing force after a prolonged exposure to a high-temperature environment (200°C)-

The two self-fusing insulated wires produced above were firmly attached to each other by settling surfaces forming long sides of the cross section so as to be the settled wire length of 200 mm. Then, the settled wire was subjected to a heat treatment at 190°C for 30 min to firmly fix a whole attachment surface. This wire was left to stand in a thermostat (temperature: 200°C) for 1000 hrs. Next, the wire was left to stand in the environment of 25°C for 8 hrs., and then was set to a tensile tester (Autograph AGS-J, manufactured by Shimadzu Corporation), and both ends of the settled wires were pulled at the pulling rate of 50 mm/min in opposite directions with respect to one another. A strength required to fracture a firmly fixed state of the two wires was defined as a fixing strength and evaluation was conducted according to the following criteria.
In the case where the fixing force was 2 MPa or more: A
In the case where the fixing force was 0.5 MPa or more and less than 2 MPa: B
In the case where the fixing force was less than 0.5 MPa: C

### -Oil resistance-

The two insulated wires produced above were firmly attached to each other by settling surfaces forming long sides of the cross section so as to be the settled wire length of 200 mm. Then, the settled wire was subjected to a heat treatment at 190°C for 30 min to firmly fix a whole attachment surface. This wire was soaked for 1000 hrs., in ATF oil heated at 150°C, and then was set to a tensile tester (Autograph AGS-J, manufactured by Shimadzu Corporation), and both ends of the settled wires were pulled at the pulling rate of 50 mm/min in opposite directions with respect to one another. A strength required to fracture a firmly fixed state of the two wires was defined as a fixing strength and evaluation was conducted according to the following criteria. Note that the soak in ATF oil was carried out at 150°C and measurement of the fixing strength was conducted at 25°C.
In the case where the fixing force was 2 MPa or more: A
In the case where the fixing force was 0.5 MPa or more and less than 2 MPa: B
In the case where the fixing force was less than 0.5 MPa: C

### -Overall evaluation-

The performance of the wire was comprehensively evaluated by applying each of evaluation results described above to the following criteria.
All of evaluation results were rated as A: Overall evaluation A
All of evaluation results were not rated as C: Overall evaluation B
Any of evaluation results was rated as C: Overall evaluation C

The above-described results are shown together in Table 1. The kinds of the resin and the hardening agent shown in Table 1 are as follows.
A1: Epoxy-group-containing phenoxy resin (trade name: YX7200B35, manufactured by Mitsubishi Chemical Corporation, bisphenol A-type, epoxy equivalent: 3,000 to 16,000 g/eq)
A2: Epoxy-group-containing phenoxy resin (trade name: YX6954BH30, manufactured by Mitsubishi Chemical Corporation, bisphenol A-type, epoxy equivalent: 10,000 to 16,000 g/eq)
A3: Epoxy-group-containing phenoxy resin (trade name: jER1256, manufactured by Mitsubishi Chemical Corporation, bisphenol A-type, epoxy equivalent: 7,500 to 8,500 g/eq)
B1: Bisphenol A-type epoxy resin (trade name: 1001, manufactured by Mitsubishi Chemical Corporation, epoxy equivalent: 450 to 500 g/eq, softening point: 67°C)
B2: o-Cresol Novolac-type epoxy resin (trade name: ECN1299, manufactured by Ciba-Geigy, epoxy equivalent: 215 g/eq, softening point: 99°C)
B3: Bisphenol A-type epoxy resin (trade name: 1004, manufactured by Mitsubishi Chemical Corporation, epoxy equivalent: 875 to 975 g/eq, softening point: 97°C)
C1: 2-Ethyl-4-methylimidazole (trade name: 2E4MZ, manufactured by Shikoku Chemicals Corporation)
C2: 2,4-Diamino-6-[2'-methylimidazolyl-(1')]-ethyl-s-triazine/isocyanuric acid adduct (trade name: 2MA-OK, manufactured by Shikoku Chemicals Corporation, melting point 260°C)

### {Table 1}

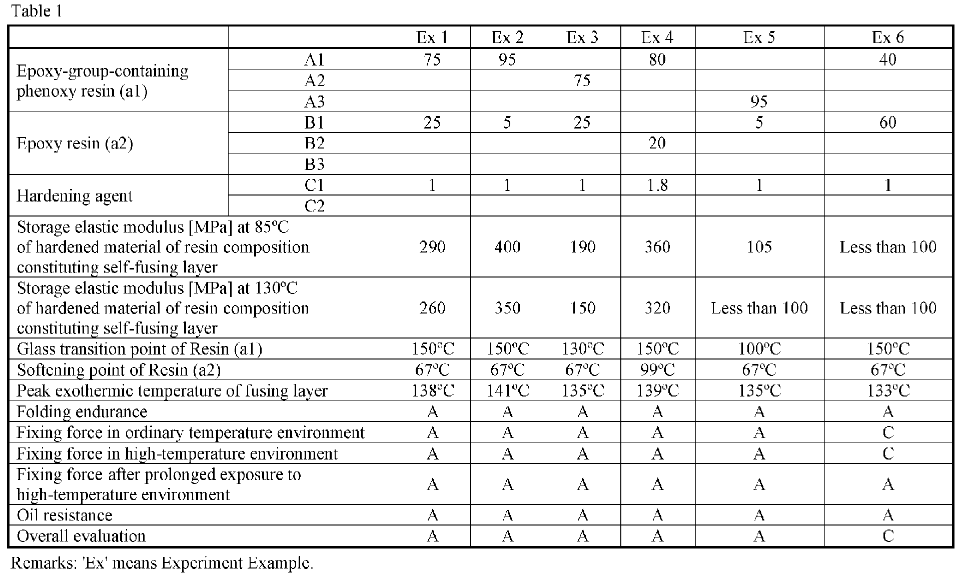

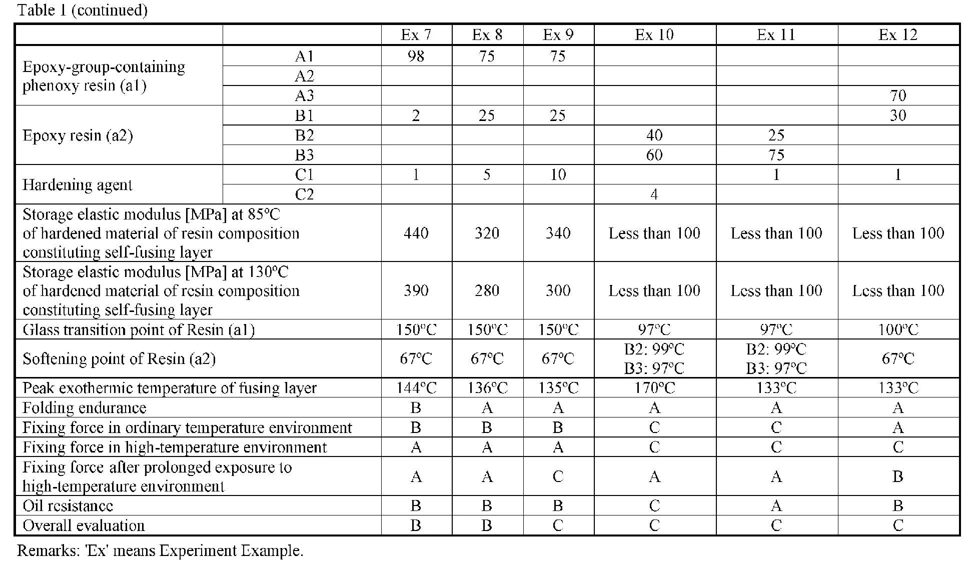

As shown in the above Table 1, in a case where a content of the epoxy resin (a1) in the fusing layer was less than the content stipulated in the present invention, a fixing strength was decreased in a high-temperature environment (Experiment Examples 6 and 12). Further, in a case where a content of the epoxy resin (a1) in the fusing layer was set to larger than the content stipulated in the present invention, a fixing strength also resulted in decrease in a high-temperature environment and also this resulted in less folding endurance (Experiment Example 7).

Further, in a case where even though a content ratio of the epoxy resins (a1) and (a2) in the fusing layer was within the content stipulated in the present invention, a content of the hardening agent exceeded the content ratio stipulated in the present invention, a fixing strength resulted in decrease after all (Experiment Examples 8 and 9).

Further, in a case where the fusing layer did not contain any resin (a1), this resulted in less fixing strength (Experiment Examples 10 and 11).

In contrast, it was found that the insured wires (Experiment Examples 1 to 5) each of which satisfies the stipulations of the present invention can achieve good maintenance of a fixing strength of the firmly fixed fusing layer even in a high-temperature environment, and also have excellent properties in any of oil resistance and folding endurance.

Having described our invention as related to the present embodiments, it is our intention that the invention not be limited by any of the details of the description, unless otherwise specified, but rather be construed broadly within its spirit and scope as set out in the accompanying claims.

This application claims priority on Patent Application No. 2015-238082 filed in Japan on December 4, 2015, which is entirely herein incorporated by reference.

### REFERENCE SIGNS LIST

1, 2, 3 Insulated wire
11, 21, 31 Conductor
12, 23, 32 Thermoplastic resin layer
13, 24, 34 Thermosetting fusing layer
22 Insulating layer (thermosetting resin layer)
14, 25, 35 Resin covering layer
40 Stator
41 Stator core
42 Slot
43 Coil
44 Wire segment
44a Open end

## Claims

1. A self-fusing insulated wire, comprising:
a conductor having a rectangular cross-section;
a thermoplastic resin layer provided on the outer periphery of the conductor; and
a thermosetting fusing layer provided on the outer periphery of the thermoplastic resin layer;
wherein the fusing layer is composed of a hardening resin composition containing an epoxy-group-containing phenoxy resin (a1), an epoxy resin (a2) having a softening point of 50°C or more and 250°C or less, and an imidazole-series hardening agent,
wherein, in the hardening resin composition, a content ratio of the resin (a1) and the resin (a2) satisfies the relationship of (a1):(a2) = 71:29 to 95:5 (mass ratio), and a content of the imidazole-series hardening agent with respect to 100 parts by mass of a total content of the resin (a1) and the resin (a2) is less than 2 parts by mass, and
wherein a storage elastic modulus at 85°C of the hardening resin composition after hardening thereof is from 100 to 2,500 MPa.

2. A self-fusing insulated wire, comprising:
a conductor having a rectangular cross-section;
a thermoplastic resin layer provided on the outer periphery of the conductor; and
a thermosetting fusing layer provided on the outer periphery of the thermoplastic resin layer;
wherein the fusing layer is composed of a hardening resin composition containing an epoxy-group-containing phenoxy resin (a1), an epoxy resin (a2) having a softening point of 50°C or more and 250°C or less, and an imidazole-series hardening agent,
wherein, in the hardening resin composition, a content ratio of the resin (a1) and the resin (a2) satisfies the relationship of (a1):(a2) = 71:29 to 95:5 (mass ratio), and a content of the imidazole-series hardening agent with respect to 100 parts by mass of a total content of the resin (a1) and the resin (a2) is less than 2 parts by mass, and
wherein a storage elastic modulus at 130°C of the hardening resin composition after hardening thereof is from 100 to 2,500 MPa.

3. The self-fusing insulated wire according to Claim 1 or 2, wherein the resin (a1) has two or more epoxy groups in its molecule.

4. The self-fusing insulated wire according to any one of Claims 1 to 3, wherein the weight average molecular weight of the resin (a1) is 10,000 to 100,000.

5. The self-fusing insulated wire according to any one of Claims 1 to 4, wherein the epoxy equivalent of the resin (a1) is 3000 to 20,000 g/eq, and the epoxy equivalent of the resin (a2) is 150 to 2,500 g/eq.

6. The self-fusing insulated wire according to any one of Claims 1 to 5, wherein the thickness of the fusing layer is 2 to 100 µm.

7. The self-fusing insulated wire according to any one of Claims 1 to 6, wherein the melting point of the thermoplastic resin constituting the thermoplastic resin layer is 250°C or more.

8. The self-fusing insulated wire according to any one of Claims 1 to 7, wherein the thermoplastic resin layer is a layer composed of one kind or two or more kinds of thermoplastic resins selected from the group consisting of polyphenylene sulfide, polyether ether ketone, modified polyether ether ketone and a thermoplastic polyimide.

9. A coil, comprising the self-fusing insulated wire according to any one of Claims 1 to 8.

10. An electrical/electronic equipment, having the coil according to Claim 9.
